# EUROPÄISCHE PATENTSCHRIFT

(11) **EP 1 333 197 B1**
(45) Veröffentlichungstag und Bekanntmachung des Hinweises auf die Patenterteilung: **03.05.2006**
(21) Anmeldenummer: 02001653.1
(22) Anmeldetag: 24.01.2002
(51) Int. Cl.: F16H 59/10

(54) **Wählhebel für ein Kraftfahrzeuggetriebe**
Shift lever for a vehicle transmission
Levier de commande de la boîte de vitesses d'un véhicule

(43) Veröffentlichungstag der Anmeldung: 06.08.2003
(73) Patentinhaber: Ford Global Technologies, LLC, Dearborn, MI 48126 (US)
(72) Erfinder: Pokrandt, Christoph, 50668 Köln (DE); De Croupp, Guido, 50169 Kerpen-Horrem (DE)
(74) Vertreter: Drömer, Hans-Carsten

(56) Entgegenhaltungen:
- EP-A- 1 170 655
- DE-A- 19 950 638
- DE-C- 19 513 809
- DE-U- 29 518 788
- JP-A- 50 032 614
- US-A- 5 247 849
- PATENT ABSTRACTS OF JAPAN vol. 014, no. 253 (P-1054), 30. Mai 1990 (1990-05-30) -& JP 02 067611 A (SONY CORP), 7. März 1990 (1990-03-07)

## Beschreibung

Die Erfindung bezieht sich auf einen Wählhebel der im Oberbegriff des Patentanspruchs 1 erläuterten Art.

Aus der EP 1170655 ist ein Wählhebel entsprechend dem Oberbegriff des Anspruches 1, für ein Kraftfahrzeuggetriebe bekannt, bei dem der Schaltgriff eine Drucktaste aufweist, die über einen Winkelhebel auf eine im Wählhebel beweglich angeordnete Steuerstange wirkt. Dabei wird die Bewegung der Drucktaste auf den drehbaren Winkelhebel übertragen, der diese Bewegung wiederum auf die Steuerstange umgelenkt und diese direkt betätigt. Zwischen Drucktaste und Winkelhebel ist jedoch eine aufwendige Lagerung mittels eines Lagerbolzens vorgesehen, um die Druckkraft in der Drucktaste möglichst reibungsfrei auf den Winkelhebel übertragen zu können.

Aufgabe der Erfindung ist es deshalb, einen Wählhebel derart zu verbessern, daß er mit einer geringeren Anzahl an beweglichen Teilen einen einfacheren Aufbau und eine leichtere und direktere Betätigung ermöglicht.

Gelöst wird diese Aufgabe mit den Merkmalen des Patentanspruches 1.

Indem die Drucktaste unmittelbar auf einen Tastenarm des Winkelhebels wirkt und ein Stangenarm des Winkelhebels unmittelbar auf die Steuerstange wirkt, ist eine unmittelbare und direkte Übertragung der Bewegung von der Drucktaste auf die Steuerstange gewährleistet. Da nur ein zusätzliches Übertragungselement zwischen Druckstück und Steuerstange, nämlich der Winkelhebel, benötigt wird, ist der bauliche Aufwand der Steuerstangenbetätigung gering. Auch weist diese Steuerstangenbetätigung nur ein geringes Spiel auf, welches im wesentlichen von der Drehlagerung des Winkelhebels bestimmt wird, die jedoch recht genau gefertigt werden kann. Weiterhin ist aufgrund der Drehlagerung der Winkelhebel sehr leichtgängig, wodurch nur geringe Reibungsverluste durch die Kraftumlenkung sich ergeben. Mit der erfindungsgemäßen Ausgestaltung des Wählhebels wird somit eine sehr unmittelbare, spielfreie und leichtgängige Steuerstangenbetätigung geschaffen.

Der Winkelhebel weist neben Tastenarm und Stangenarm Mittel für die Drehlagerung auf. Die Drehlagerung kann eine runde Bohrung im Winkelhebel mit einer durch die Bohrung geführten entsprechenden Achse sein, wobei die Achse im Schaltgriff gelagert ist und der Winkelhebel um die Achse drehbar ist. Die Drehlagerung kann auch aus einer Welle bestehen, die drehfest mit dem Winkelhebel verbunden ist, und die drehbar im Schaltgriff gelagert ist. Die Welle kann ein separates Teil sein oder sie kann Bestandteil des Winkelhebels selbst sein, z. B. in Form angegossener Lagerzapfen.

Bevorzugt sind Tastenarm und Stangenarm des Winkelhebels Teile einer Hebelscheibe, so daß die Hebelscheibe im wesentlichen den Winkelhebel bildet. Die Drehlagerung ist dann in Form einer Bohrung oder von z. B. Lagerzapfen an der Hebelscheibe vorgesehen. Ein derartiger Winkelhebel weist eine sehr einfache und robuste Gestaltung auf. Durch die flächige Ausformung erfolgt die Kraftübertragung von Tastenarm auf den Stangenarm sehr direkt über Druckkräfte in der Hebelscheibe, ohne daß Biegemomente im Winkelhebel auftreten; somit kann der Winkelhebel sehr leicht gebaut sein.

In einer bevorzugten Ausführung ist der Winkelhebel durch eine im Schaltgriff angeordnete Achse drehbar gelagert, wobei die Achse mittels einer Oberflächenverkleidung des Schaltgriffes im Schaltgriff arretiert ist. Dies dient einer einfacheren Herstellung, da hier auf zusätzliche Befestigungselemente zur Arretierung der Achse verzichtet werden kann. Bei der Montage wird der Winkelhebel an seine Position verbracht, dann wird die Achse durch den Schaltgriff und den Winkelhebel gesteckt. Die Arretierung der Achse ergibt sich, wenn nach der Montage des Winkelhebels und der Achse die Oberflächenverkleidung des Schaltgriffes aufgebracht wird. Diese verdeckt die Bohrungen für die Achse im Schaltgriff und verhindert somit ein Herausfallen der Achse.

In einer weiteren bevorzugten Ausführung weist der Schaltgriff eine Montageöffnung auf, die zumindest teilweise mit einem Schaltgriffdeckel verschlossen ist. Damit kann der Winkelhebel durch die Montageöffnung, die in der Regel nicht mit der Drucktastenöffnung übereinstimmt, im Schaltgriff montiert werden, wodurch der Montageaufwand vereinfacht wird. Der Winkelhebel läßt sich auch dann montieren, nachdem der Schaltgriff auf der Wählhebelstange des Wählhebels montiert wurde, während die noch offene Montageöffnung erst am Ende des Montagevorganges mit dem Schaltgriffdeckel verschlossen wird.

In einer weiteren bevorzugten Ausführung weist der Schaltgriffdeckel Informations-, Stil- und/oder Verzierungselemente auf. Neben seiner Funktion als Montageöffnungsverschluß wird damit der Schaltgriffdeckel als Informations-, Stil- und/oder Verzierungselement des Wählhebels genutzt. Stilelemente können sein z. B. Firmenembleme oder Markenlogos, Informationselemente können sein z. B. Schaltschemata für die Gangschaltung. Oder der Schaltgriffdeckel dient als Verzierungselement, das eine strukturierten und/oder abgesetzte Oberfläche aufweist. Dabei kann der Schaltgriffdeckel zumindest teilweise andere Oberflächenmaterialien als die restliche Schaltgriffoberfläche aufweisen. Selbstverständlich ist für die Oberflächengestaltung des Schaltgriffdeckels auch jede Kombination der vorstehenden Merkmale möglich.

Bei einer weiteren Ausgestaltung der Erfindung weist der Schaltgriffdeckel ein Gegenlager für den Winkelhebel auf. Dazu ist am Schaltgriffdeckel ein entsprechender Absatz angeordnet, der mit den Lagerstellen für den Winkelhebel im Schaltgriff zusammenwirkt und somit das Gegenlager bildet. Der Schaltgriffdeckel hält damit den Winkelhebel im Schaltgriff fest, ohne daß eine zusätzliche Arretierung oder ein zusätzliches Befestigungselement erforderlich ist.

In einer weiteren vorteilhaften Ausführung weist der Schaltgriff eine Montageöffnung auf, die zumindest teilweise mit einem Schaltgriffdeckel verschlossen ist, bei der ein Lagerblock ein Gegenlager für den Winkelhebel bildet und der Lagerblock vom Schaltgriffdeckel im Schaltgriff gehalten wird. Diese Ausführung entspricht im Prinzip der im vorherigen Absatz beschriebenen Ausführung, es wird jetzt lediglich die Lagerfunktion des Schaltgriffdeckels vom Lagerbock übernommen. Auf diese Weise kann der Schaltgriffdeckel und Lagerbock jeweils recht einfach geformt sein gegenüber dem Schaltgriffdeckel mit integriertem Gegenlager, und der Lagerbock benötigt keine eigene Befestigung im Schaltgriff.

In einer weiteren vorteilhaften Ausgestaltung weist der Winkelhebel Mittel zur Bewegungsdämpfung auf. Diese können sowohl in beide Drehrichtungen als auch nur in eine Richtung wirken. Vorteilhaft kann damit ein Rückschlag abgedämpft werden, der beim Loslassen des Drucktasters durch das Zurückfedern der Steuerstange entsteht. Der gedämpfte Winkelhebel führt dann nur eine gebremste Rückstellbewegung durch. Vorteilhaft erfolgt hier die Dämpfung nur in eine Richtung, nämlich die Rückstellrichtung.

Die Dämpfungsmittel können jedoch auch eingesetzt werden, wenn die Betätigungsbewegung selber gedämpft werden soll, so daß ein angenehm weiches, gleichmäßiges Schaltgefühl bei der Betätigung des Drucktasters resultiert. In einem solchen Fall muß zumindest in Betätigungsrichtung des Winkelhebels ein Dämpfungsmittel wirken. Natürlich läßt sich die Dämpfung auch für beide Richtungen erzielen, indem die Dämpfungsmittel in beide Richtungen wirken oder für jede Richtung ein Dämpfungsmittel vorgesehen ist.

Dämpfungsmittel können z.B. bekannte Silikondämpfer sein, die eine geschwindigkeitsabhängige Dämpfungscharakteristik aufweisen. Aber auch einfache Reibdämpfer, vor allem wenn nur in eine Richtung Dämpfung gewünscht ist, können zur Anwendung kommen. Bevorzugt sind die Dämpfer auf der Achse bzw. der Welle des Winkelhebels angeordnet. Insbesondere Reibdämpfer können jedoch auch auf den Armen des Winkelhebels selbst wirken.

Vorteilhaft kann auf der Achse bzw. Welle des Winkelhebels zumindest ein elastischer Ring angeordnet sein, der einen Endanschlag für die Drucktaste darstellt. Ein solcher Ring kann ein bekannter Dichtungsring aus Gummi (O-Ring) oder ein hülsenförmiger Schlauchabschnitt sein, wobei natürlich auch zwei oder mehrere dieser Ringe auf der Achse bzw. Welle, einseitig oder beidseitig des Winkelhebels, angeordnet sein können. Indem die Drucktaste in ihrer Endposition gegen einen oder mehrere dieser Ringe stößt, wird der harte Endanschlag gedämpft und es entsteht ein angenehmes Schaltgefühl.

Bei einer vorteilhaften Ausgestaltung der Erfindung weist die Drucktaste eine gekrümmte Druckfläche, welche auf den Tastenarm wirkt, auf. Bei einer weiteren vorteilhaften Ausgestaltung der Erfindung weist der Tastenarm eine gekrümmte Druckfläche, auf welche die Drucktaste wirkt, auf. Die beiden zusammenwirkenden Druckflächen von Drucktaste und Tastarm sind dabei so gewählt, daß bei einer Bewegung der Drucktaste bei der Betätigung, die eine Drehbewegung des Winkelhebels bewirkt, die beiden Druckflächen überwiegend aufeinander abrollen, wie z. B. bei der Evolventenverzahnung von Zahnrädern. Dies kann konstruktiv erreicht werden, indem nur eine der beiden Druckflächen gekrümmt ist und die andere Fläche eben, oder aber beide Druckflächen sind gekrümmt. Durch die überwiegende Abrollbewegung zwischen den Druckflächen wird die Gleitreibung zwischen den Druckflächen erheblich reduziert, wodurch insgesamt weniger Kraftaufwand für die Betätigung der Drucktaste bzw. der Steuerstange erforderlich ist.

Unter Krümmung ist hier eine Krümmung zu verstehen, deren Radius oder Radien eine Drehachse vorwiegend parallel zur Drehachse des Winkelhebels aufweisen. Die Druckflächen können auch noch andere, fertigungs- und/ oder funktionsbedingte Krümmungen aufweisen, die jedoch nicht für die primäre Funktion des gegenseitigen Abrollens erforderlich sind.

Weitere vorteilhafte Ausgestaltungen der Erfindungen betreffen die Druckflächen zwischen Winkelhebel und Steuerstange. Entweder, der Stangenarm weist eine gekrümmte Druckfläche, welche auf die Steuerstange wirkt, auf, oder die Steuerstange weist eine gekrümmte Druckfläche, auf welche der Winkelhebel wirkt, auf, oder aber beide Druckflächen sind gekrümmt. Auch für diese Ausführungen gilt das bereits vorher für die zwischen Drucktaste und Winkelhebel angeordneten Druckflächen Gesagte.

Bei allen möglichen Ausführungen kann die Drucktaste entweder verschiebbar oder drehbar im Schaltgriff angeordnet sein. Dies richtet sich nach den jeweils erforderlichen und gewünschten Bewegungen der Drucktaste bei der Betätigung.

Weitere vorteilhafte Ausgestaltungen der Erfindung sind den Zeichnungen zu entnehmen. Es zeigen:
- Fig. 1: die Seitenansicht des Wählhebels;
- Fig. 2: einen Schnitt durch den Wählhebel entlang der Symmetrieebene; und
- Fig. 3: die Drucktaste in der Seitenansicht im aufgeschnittenen Schaltgriff.

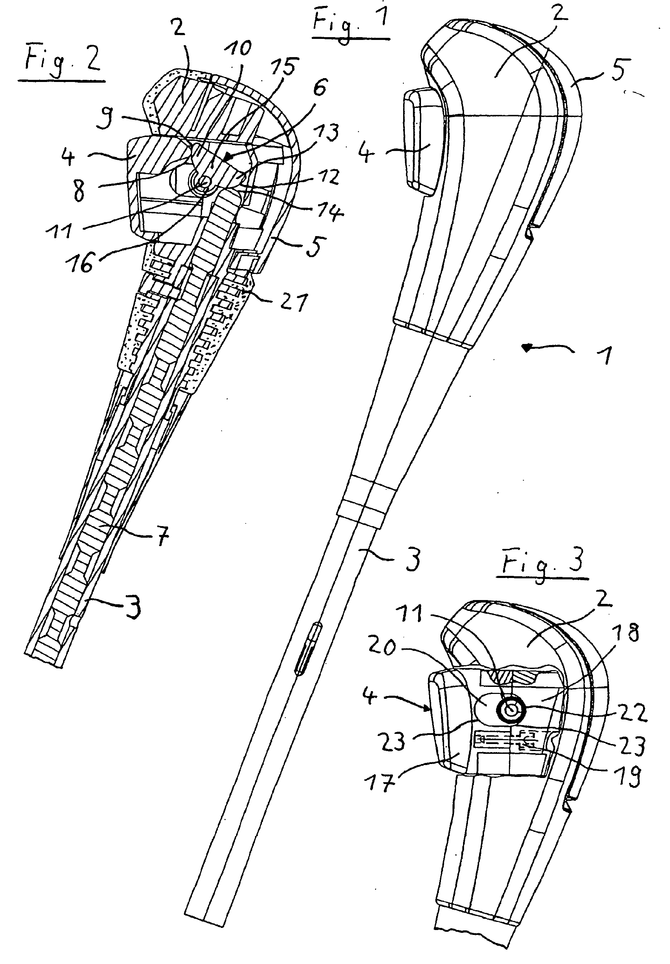

Figur 1 zeigt die Seitenansicht des Wählhebels 1 mit dem Schaltgriff 2, welcher auf der Wählhebelstange 3 montiert ist. Im Schaltgriff 2 ist die Drucktaste 4 angeordnet. Oben weist der Schaltgriff 2 eine Montageöffnung auf, die mit dem Schaltgriffdeckel 5 geschlossen ist.

In Figur 2 ist der Schnitt entlang der Symmetrieebene des Wählhebels 1 dargestellt. Die wesentlichen Funktionselemente der Betätigungseinrichtung sind die längs verschiebbare Drucktaste 4, der drehbare Winkelhebel 6 und die in der Wählhebelstange 3 längs verschiebbare Steuerstange 7. Bei Betätigung der Drucktaste 4 im Schaltgriff 2, d. h. die Drucktaste 4 bewegt sich geradlinig in den Schaltgriff 2, wirkt die Druckfläche 8 der Drucktaste 4 auf die Druckfläche 9 des Tastenarmes 10. Der Winkelhebel 6 ist auf der Achse 11 drehbar gelagert und wird durch die Betätigung in Drehung versetzt. Diese Drehung überträgt sich über die Druckfläche 12 des Stangenarms 13 auf die Druckfläche 14 der Steuerstange 7, die dann die gewünschte Steuerbewegung ausführt.

Sowohl die Druckflächen 8 und 9 zwischen Drucktaste 4 und Tastenarm 9 als auch die Druckflächen 12 und 14 zwischen Stangenarm 13 und Steuerstange 7 sind gekrümmt ausgeführt, wobei die Krümmungen so gewählt sind, daß während der Betätigung alle Druckflächen 8, 9, 12, 14 bei den überlagerten Längs- und Drehbewegungen von Drucktaste 4, Winkelhebel 6 und Steuerstange 7 aufeinander abrollen und nicht gegeneinander reiben.

Der Winkelhebel 6 ist hier als Hebelscheibe 15 ausgeführt, d. h. Tastenarm 10 und Stangenarm 12 sind Teil der Hebelscheibe 15. Für die Achse 11 ist eine entsprechende Bohrung im Winkelhebel 6 vorgesehen, wobei die Bohrung in einer Erweiterung 16 der Hebelscheibe 15 angeordnet ist. Die Achse 11 selbst ist im Schaltgriff 2 direkt gelagert. Zur Montage wird der Winkelhebel 6 an seine Position verbracht, dann wird die Achse 11 durch den Schaltgriff 2 und den Winkelhebel 6 gesteckt. Die Arretierung der Achse 11 ergibt sich automatisch, wenn die Oberflächenverkleidung 21 des Schaltgriffes aufgebracht wird, die dann die Bohrungen für die Achse 11 im Schaltgriff 2 komplett verdeckt.

In Figur 3 ist die Drucktaste 4 im aufgeschnittenen Schaltgriff 2 gezeigt. Die Drucktaste 4 setzt sich hier aus einem vorderen Druckstück 17 und einem hinteren Schließstück 18 zusammen, die beide durch zwei Schrauben 19 zusammengehalten werden. Die Achse 11 des (nicht dargestellten) Winkelhebels 6 wird durch die längliche Achsöffnung 20 der Drucktaste 4 geführt. Auf der Achse 11 sind zwei hülsenförmige Ringe 22 aus elastischem Material angeordnet, je eins auf einer Seite des Winkelhebels 6, die mit den kurzen Seiten 23 der länglichen Achsöffnung 20 in den Endpositionen der Drucktaste 4 zusammenwirken. Wenn die Drucktaste 4 in den Endpositionen an den elastischen Ringen 22 anschlägt, wird dieser Aufprall durch das elastische Material gedämpft und es entsteht ein angenehmes Schaltgefühl.

## Patentansprüche

1. Wählhebel (1) für ein Kraftfahrzeuggetriebe, mit einem Schaltgriff (2), mit einer im Schaltgriff (2) angeordneten Drucktaste (4), und mit einer im Wählhebel (1) beweglich angeordneten Steuerstange (7), wobei die Bewegung der Drucktaste (4) über einen Winkelhebel (6), der drehbar im Schaltgriff (2) gelagert ist, auf die Steuerstange (7) umgelenkt wird, wobei die Drucktaste (4) auf einen Tastenarm (10) des Winkelhebels (6) wirkt und ein Stangenarm (13) des Winkelhebels (6) unmittelbar auf die Steuerstange (7) wirkt,
**dadurch gekennzeichnet, daß**
eine Druckfläche (8) der Drucktaste (4) und eine Druckfläche (9) des Tastenarmes (10) unmittelbar zusammenwirken, so daß nur ein zusätzliches Übertragungselement zwischen Drucktaste (4) und Steuerstange (7), nämlich der Winkelhebel (6), benötigt wird, wobei mindestens eine der Druckflächen (8, 9) gekrümmt ist.

2. Wählhebel nach Anspruch 1,
**dadurch gekennzeichnet, daß**
Tastenarm (10) und Stangenarm (13) des Winkelhebels (6) Teile einer Hebelscheibe (15) sind.

3. Wählhebel nach Anspruch 1 oder 2,
**dadurch gekennzeichnet, daß**
der Winkelhebel (6) durch eine im Schaltgriff (2) angeordnete Achse (11) drehbar gelagert ist, wobei die Achse (1) mittels einer Oberflächenverkleidung (21) des Schaltgriffes (2) im Schaltgriff (2) arretiert ist.

4. Wählhebel nach Anspruch 1, 2 oder 3,
**dadurch gekennzeichnet, daß**
der Schaltgriff (2) eine Montageöffnung aufweist, die zumindest teilweise mit einem Schaltgriffdeckel (5) verschlossen ist.

5. Wählhebel nach Anspruch 4,
**dadurch gekennzeichnet, daß**
der Schaltgriffdeckel (5) Informations-, Stil- und/oder Verzierungselemente aufweist.

6. Wählhebel nach Anspruch 4 oder 5,
**dadurch gekennzeichnet, daß**
der Schaltgriffdeckel (5) ein Gegenlager für den Winkelhebel (6) aufweist.

7. Wählhebel nach Anspruch 4 oder 5,
**dadurch gekennzeichnet, daß**
ein Lagerblock ein Gegenlager für den Winkelhebel (6) bildet und der Lagerblock vom Schaltgriffdeckel (5) im Schaltgriff gehalten (2) wird.

8. Wählhebel nach einem der vorherigen Ansprüche,
**dadurch gekennzeichnet, daß**
der Winkelhebel (6) Mittel zur Bewegungsdämpfung aufweist.

9. Wählhebel nach Anspruch 8,
**dadurch gekennzeichnet, daß**
die Mittel zur Bewegungsdämpfung nur in eine Richtung wirken.

10. Wählhebel nach einem der vorherigen Ansprüche,
**dadurch gekennzeichnet, daß**
auf einer Achse (11) bzw. einer Welle des Winkelhebels (6) zumindest ein elastischer Ring (22) angeordnet ist, der einen Endanschlag für die Drucktaste (4) darstellt.

11. Wählhebel nach einem der vorherigen Ansprüche,
**dadurch gekennzeichnet, daß**
der Stangenarm (13) eine gekrümmte Druckfläche (12), welche auf die Steuerstange (7) wirkt, aufweist.

12. Wählhebel nach einem der vorherigen Ansprüche,
**dadurch gekennzeichnet, daß**
die Steuerstange (7) eine gekrümmte Druckfläche (14), auf welche der Winkelhebel (6) wirkt, aufweist.

## Claims

1. Selector lever (1) for a motor vehicle transmission, having a selector handle (2), having a push button (4) arranged in the selector handle (2), and having a control rod (7) arranged in a movable manner in the selector handle (1), the movement of the push button (4) being deflected to the control rod (7) by means of an angle lever (6) which is mounted in a rotatable manner in the selector handle (2), the push button (4) acting on a button arm (10) of the angle lever (6) and a rod arm (13) of the angle lever (6) acting directly on the control rod (7),
**characterized in that**
a pressure surface (8) of the push button (4) and a pressure surface (9) of the button arm (10) interact directly, so that only one additional transmission element, namely the angle lever (6), is required between the push button (4) and the control rod (7), at least one of the pressure surfaces (8, 9) being curved.

2. Selector lever according to Claim 1,
**characterized in that**
the button arm (10) and the rod arm (13) of the angle lever (6) are parts of a lever plate (15).

3. Selector lever according to Claim 1 or 2,
**characterized in that**
the angle lever (6) is mounted in a rotatable manner by means of an axle (11) arranged in the selector handle (2), the axis (11) being located in position in the selector handle (2) by means of an outer casing (21) of the selector handle (2).

4. Selector lever according to Claim 1, 2 or 3,
**characterized in that**
the selector handle (2) has an assembly opening which is at least partly closed off by a selector handle cover (5).

5. Selector lever according to Claim 4,
**characterized in that**
the selector handle cover (5) has information, style and/or decorative elements.

6. Selector lever according to Claim 4 or 5,
**characterized in that**
the selector handle cover (5) has a counter bearing for the angle lever (6).

7. Selector lever according to Claim 4 or 5,
**characterized in that**
a bearing block forms a counter bearing for the angle lever (6) and the bearing block is held in the selector handle (2) by the selector handle cover (5).

8. Selector lever according to one of the preceding claims,
**characterized in that**
the angle lever (6) has movement damping means.

9. Selector lever according to Claim 8,
**characterized in that**
the movement damping means are effective in only one direction.

10. Selector lever arrangement according to one of the preceding claims,
**characterized in that**
at least one elastic ring (22) is arranged on an axle (11) or a shaft of the angle lever (6), which elastic ring represents an end stop for the push button (4).

11. Selector lever according to one of the preceding claims,
**characterized in that**
the rod arm (13) has a curved pressure surface (12) which acts on the control rod (7).

12. Selector lever according to one of the preceding claims,
**characterized in that**
the control rod (7) has a curved pressure surface (14) on which the angle lever (6) acts.

## Revendications

1. Levier de sélection (1) pour une boîte de vitesses de véhicule automobile, comprenant une poignée de commande (2) avec un bouton poussoir (4) disposé dans la poignée de commande (2), et avec une tige de commande (7) disposée mobile dans le levier de sélection (1), le mouvement du bouton poussoir (4) étant dévié vers la tige de commande (7) par le biais d'un levier coudé (6) qui est monté à rotation dans la poignée de commande (2), le bouton poussoir (4) agissant sur un bras côté bouton (10) du levier coudé (6) et un bras côté tige (13) du levier coudé (6) agissant directement sur la tige de commande (7),
**caractérisé en ce que**
une surface de pression (8) du bouton poussoir (4) et une surface de pression (9) du bras côté bouton (10) coopèrent directement, de sorte que seulement un élément de transfert supplémentaire soit nécessaire entre le bouton poussoir (4) et la tige de commande (7), à savoir le levier coudé (6), au moins l'une des surfaces de pression (8, 9) étant courbée.

2. Levier de sélection selon la revendication 1,
**caractérisé en ce que**
le bras côté bouton (10) et le bras côté tige (13) du levier coudé (6) font partie d'un plateau de levier (15).

3. Levier de sélection selon la revendication 1 ou 2,
**caractérisé en ce que**
le levier coudé (6) est monté à rotation par un axe (11) disposé dans la poignée de commande (2), l'axe (11) étant bloqué dans la poignée de commande (2) au moyen d'un revêtement de surface (21) de la poignée de commande (2).

4. Levier de sélection selon la revendication 1, 2 ou 3,
**caractérisé en ce que**
la poignée de commande (2) présente une ouverture de montage qui est fermée au moins partiellement avec un couvercle de poignée de commande (5).

5. Levier de sélection selon la revendication 4,
**caractérisé en ce que**
le couvercle de la poignée de commande (5) présente des éléments d'information, de style et/ou de décoration.

6. Levier de sélection selon la revendication 4 ou 5,
**caractérisé en ce que**
le couvercle de la poignée de commande (5) présente un contre-support pour le levier coudé (6).

7. Levier de sélection selon la revendication 4 ou 5,
**caractérisé en ce que**
un bloc palier forme un contre-support pour le levier coudé (6) et le bloc palier est maintenu dans la poignée de commande (2) par le couvercle de la poignée de commande (5).

8. Levier de sélection selon l'une quelconque des revendications précédentes,
**caractérisé en ce que**
le levier coudé (6) présente des moyens d'amortissement du mouvement.

9. Levier de sélection selon la revendication 8,
**caractérisé en ce que**
les moyens d'amortissement du mouvement agissent uniquement dans une direction.

10. Levier de sélection selon l'une quelconque des revendications précédentes,
**caractérisé en ce que**
au moins une bague élastique (22) est disposée sur un axe (11) ou un arbre du levier coudé (6), laquelle constitue une butée de fin de course pour le bouton poussoir (4).

11. Levier de sélection selon l'une quelconque des revendications précédentes,
**caractérisé en ce que**
le bras côté tige (13) présente une surface de pression courbée (12) qui agit sur la tige de commande (7).

12. Levier de sélection selon l'une quelconque des revendications précédentes,
**caractérisé en ce que**
la tige de commande (7) présente une surface de pression courbée (14) sur laquelle agit le levier coudé (6).
